# EUROPEAN PATENT APPLICATION

(11) **EP 1 289 290 A2**
(43) Date of publication of application: **05.03.2003**
(21) Application number: 02018422.2
(22) Date of filing: 16.08.2002
(51) Int. Cl.: H04N 5/783

(54) **Methods and apparatus for the display of advertising material during personal versatile recorder trick play modes**

(30) Priority: 20.08.2001 US 933311
(71) Applicant: General Instrument Corporation, Horsham, Pennsylvania 19044 (US)
(72) Inventor: Makofka, Douglas S., Pennsylvania 19090 (US)
(74) Representative: Beck, Jürgen, Dr. Dipl.-Phys.

(57) **Abstract**

The present invention relates to the display of advertising material on a personal versatile recorder (PVR) 10 during trick play modes. Television or other program material 20 is stored on a PVR. Advertising material is also stored on the PVR. One or more memory devices (e.g., program file 20 and ad file 30) may be provided for storing the program material and advertising material on the PVR. A display engine 40 is provided which is associated with the one or more memory devices for providing display output 50. A motion control engine 70 is used to direct the display engine 40 to merge the advertising material 30 with the program material 20 during PVR trick play modes such that the advertising material 30 is displayed, e.g., on a display device 100. The trick play modes may include pause, scan forward, scan backward, jump, still frame display, and the like. An ad selection engine 60 may be provided for controlling the advertising material to be displayed.

## Description

### BACKGROUND OF THE INVENTION

The present invention relates to the field of multi-media recording and playback. More specifically, the present invention relates to the display of advertising material on a personal versatile recorder (PVR) during trick play modes, such as fast forward, rewind, stop, pause, jump, still frame display, and the like.

Cable and satellite television systems are capable of providing a viewer with hundreds of channels of television programming. Such an abundance of programming often creates difficult viewing choices for a viewer when two programs that the viewer would like to watch are broadcast simultaneously. In addition, a viewer may like to record for later viewing a program which is broadcast at an inconvenient time.

These problems were first overcome by recording devices such as the video cassette recorder (VCR). A VCR allows a viewer to record incoming audiovisual programming while viewing a different channel. A VCR also allows a viewer to record programming while the viewer is unavailable to watch the programming by presetting program times into the VCR. Thus the VCR allows a viewer to record and view programming that the viewer would otherwise not be able to view.

The VCR concept has been expanded in recent years to include digital compression devices that provide additional features for managing the reception and recording of analog audiovisual programming. Such products have been given various names, such as personal video recorders, video recording computers, and personal television servers (hereinafter "personal video recorders"). Current examples of personal video recorders include the TiVo® system made by TiVo, Inc. and the ReplayTV® system made by Replay Networks, Inc. Personal video recorders replace the conventional VCR recording medium with a hard drive internal to the recorder. The personal video recorder is connected between a viewer's television set and set-top terminal, satellite receiver, or antenna. The personal video recorder can control the channel tuned on the television, provide an interactive electronic program guide, and record programming on a manual or timer controlled basis. Additionally, the personal video recorder can buffer incoming audiovisual programming to enable a viewer to pause or replay a portion of a live television program, so long as the pause or replay does not exceed the capacity of the buffer. The personal video recorder can alternatively be built into the set-top terminal or the television, instead of comprising a separate stand alone box.

However, the prior art personal video recorder does not have the capability to store and replay other types of media, including Internet data files such as web pages, MP3 files, JPEG files, bit map files, and the like. In addition, the prior art personal video recorder does not have the capability to store, retrieve and replay streamed audiovisual digital programming content from the Internet or other caching servers.

The personal versatile recorder (PVR) developed by General Instrument Corporation of Horsham, Pennsylvania, the assignee of the present invention, overcomes the disadvantages of the prior art personal video recorders. One implementation of a PVR is described in U.S. patent application no. 09/520,968, filed on March 8, 2000, entitled "Personal Versatile Recorder and Method of Implementing and Using Same." The PVR enables the receipt, recording, retrieval and playback of a variety of types of data or data files on a hard drive, including but not limited to digital and analog audiovisual programming, streaming media, picture files, video files, audio files, Hypertext Markup Language (HTML) files, and various types of Internet multimedia content.

Television programming generates revenue through commercial advertising. Television programming providers are constantly looking to expand the methods of generating commercial advertising revenue. The capabilities of the PVR (and similar devices) provide opportunities for generating additional commercial revenue. For example, during PVR "trick play modes" such as fast forward, rewind, stop, pause, jump, still frame display, and the like, a viewer is viewing the television screen, but no programming is being displayed. Therefore, it would be advantageous to display advertising materials during PVR trick play modes when the viewer is viewing the television but no programming content is being displayed.

The methods and apparatus of the present invention provide the foregoing and other advantages.

### SUMMARY OF THE INVENTION

The present invention relates to the display of advertising material on a personal versatile recorder (PVR) during trick play modes. Television or other program material is stored on a PVR. Advertising material is also stored on the PVR. One or more memory devices may be provided for storing the program material and advertising material on the PVR. A display engine is provided which is associated with the one or more memory devices for providing display output. A motion control engine is used to direct the display engine to merge the advertising material with the program material during PVR trick play modes such that the advertising material is displayed, e.g., on a display device. The trick play modes may include pause, scan forward, scan backward, jump, still frame display, and the like. An ad selection engine may be provided for controlling the advertising material to be displayed.

### BRIEF DESCRIPTION OF THE DRAWINGS

The present invention will hereinafter be described in conjunction with the appended drawing figures, wherein like numerals denote like elements, and:
Figure 1 shows an exemplary embodiment of a personal versatile recorder (PVR) subsystem implemented in a set-top terminal;
Figure 2 shows a first exemplary embodiment of the invention;
Figure 3 shows a second exemplary embodiment of the invention; and
Figure 4 shows a third exemplary embodiment of the invention.

### DETAILED DESCRIPTION OF THE INVENTION

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing a preferred embodiment of the invention. It being understood that various changes may be made in the function and arrangement of elements without departing from the spirit and scope of the invention as set forth in the appended claims.

In addition, it should be understood by those skilled in the art that, although the invention is described as implemented in connection with a personal versatile recorder device (PVR) subsystem of a set-top terminal, the invention may also be implemented for use in a stand alone PVR device. In addition, those skilled in the art will realize that the invention may be implemented in connection with other types of recording devices, including personal video recorders, digital video recorders, video cassette recorders, and the like.

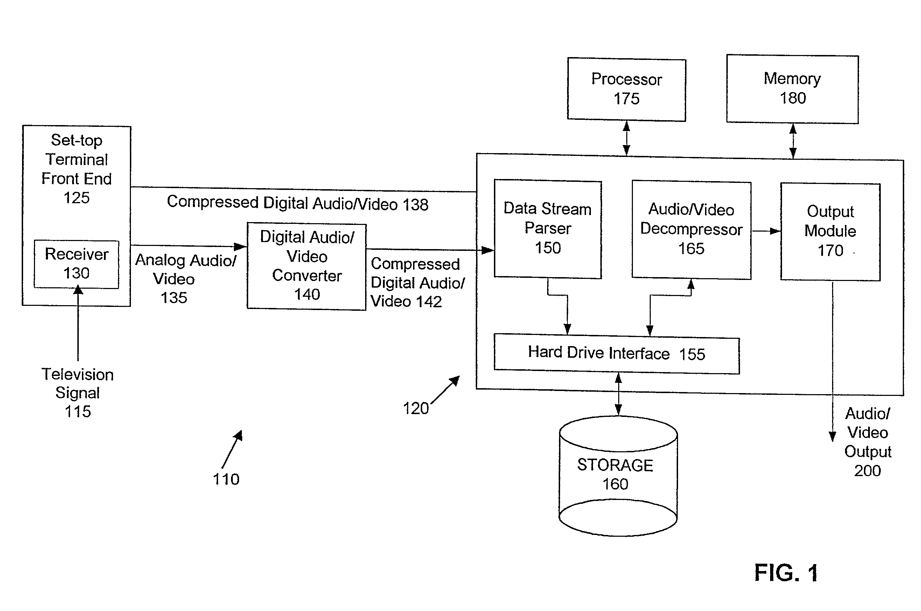

The present invention may be implemented in a PVR device or similar recording device. Figure 1 shows a simplified PVR subsystem 120 contained in a set-top terminal generally designated 110. A detailed description of a PVR subsystem is provided in commonly assigned, co-pending U.S. patent application no. 09/520,968, filed on March 8, 2000, entitled "Personal Versatile Recorder and Method of Implementing and Using Same." A brief overview of the simplified PVR subsystem of Figure 1 will assist in the explanation of the invention. As illustrated in the drawing, set-top terminal 110 receives a television signal 115 in a conventional manner at a receiver 130 in the front-end 125 of the set-top terminal. The receiver 130 may receive an analog signal or a digital signal. In addition to a receiver 130 (which includes a television tuner), the front-end 125 of the set-top terminal 110 may also include an analog video demodulator and a descrambler for demodulating and descrambling a received analog signal in a conventional manner. Similarly, a demodulator and decryptor may be provided in the front-end 125 for demodulating and decrypting a received digital signal in a conventional manner.

In the event that receiver 130 is an analog receiver, the selected analog audio/video signal 135 is converted to a compressed digital signal 142 at a digital audio/video converter 140. The compressed digital signal 142 is then passed to a data stream parser 150 of the PVR subsystem 120. In the event the received signal is a digital signal, the compressed digital signal 138 is passed directly to the data stream parser 150 of the PVR subsystem 120.

The data stream parser 150 extracts compressed digital audio/video packets (e.g., in response to a user's request for recording of a particular program) from the compressed digital audio/video signals (138, 142) and forwards the digital audio/video packets to a hard drive interface 155 for writing to a storage device 160. Storage device 160 may comprise a hard drive, an optical disk, or any other suitable type of mass storage device, or combination of devices. The storage device 160 stores the digital audio/video packets. The audio/video decompressor 165 can then access and retrieve the digital audio/video packets from the storage device 160 (via hard drive interface 155), decompress the digital audio/video packets, and forward them to the output module 170. The output module 170 converts the decompressed digital audio/video packets to a standard audio/video format, which is provided as output 200 to a display device (not shown). A processor 175 is provided for control of the PVR subsystem. Those skilled in the art will appreciate that processor 175 may be the central processing unit of the set-top terminal 110, or may provide processing functions for the PVR subsystem 120 only.

Memory 180 provides storage and buffering for all conventional set-top terminal functions which require memory, such as audio/video processing, decompression, graphics systems, transport processing, and the like. With respect to the PVR device 120, memory 180 provides various storage and buffering functions, including storage for data stream processing (i.e. picking out the data a user wants to record and/or playback from the digital data stream coming into the data stream parser 150), buffering in connection with decompression of the audio/video packets, buffering of output audio/video to enable trick play modes such as scan forward, scan backward, jump, pause, and stop, as well as storage for anything that the processor 175 may need in order to control the PVR device 120, such as building index tables into the video stream to enable video navigation by the PVR. Memory 180 may also provide memory for graphics processing by the PVR and buffering for use in video encoding in connection with the audio/video decompressor 165 (e.g., as necessary to convert the decompressed digital audio/video packets to standard audio/video formats for output to the display device).

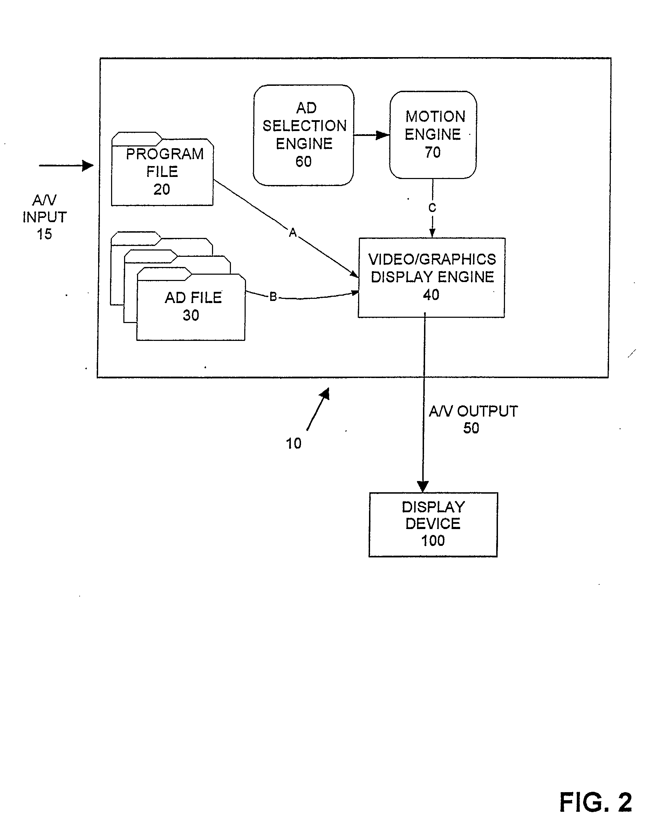

In an exemplary embodiment as shown in Figure 2, advertising material is displayed during personal versatile recorder (PVR) trick play modes. Television or other program material is received at audiovisual input 15 and stored on PVR 10. Advertising material is also stored on the PVR 10. One or more memory devices may be provided for storing the program material and advertising material on the PVR 10. For example, program material may be stored in a PVR program file 20 and advertising material may be stored in PVR ad file 30. A display engine 40 is provided which is associated with the one or more memory devices (e.g., 20 and 30) for providing audio/video output 50 to a display device 100, such as a CRT, LCD display, or other display known in the art. An motion control engine 70 is used to direct the display engine 40 to merge the advertising material 30 with the program material 20 during PVR trick play modes such that the advertising material is displayed, e.g., on the display device 100 during the trick play modes. The trick play modes may include pause, scan forward, scan backward, jump, still frame display, and the like. An ad selection engine 60 may be provided for controlling the advertising material to be displayed.

Those skilled in the art will appreciate that the PVR 10 receives, stores, processes, and provides replay of the audiovisual program material in a conventional manner as described above in connection with Figure 1. For simplicity, the components of the conventional PVR as shown in Figure 1 are not duplicated in Figures 2-4.

In Figure 2, arrow A shows a path from the program file 20 to the display engine 40. Arrow B shows a path from the ad file 30 to the display engine 40. Arrow C shows a control path from the motion control engine 70 to the display engine 40. During normal PLAY function, the motion control engine 70 instructs the display engine 40 (via path C) to display the service coming from the program file 20 via path A. When a motion control command for a trick play mode is received by the motion control engine 70, the motion control engine 70 instructs the display engine 40 to merge advertising material received via path B from ad file 30 with program material from program file 20 received via path A.

The display engine 40, motion control engine 70, and ad selection engine 60 may be implemented in software and/or firmware on one or more processors within the PVR device 10 (e.g., processor 175 of Figure 1). The memory devices (e.g., ad file 30 and program file 20) may be part of the PVR memory device (e.g., storage device 160 of Figure 1) or may be a separate memory device. The memory device(s) may be a hard drive, an optical disk, or any other suitable type of mass storage device, or combination of devices.

The merging of the advertising material 30 and the program material 20 may be accomplished by alpha blending the advertising material 30 with the program material 20. Alpha blending refers to an additional (fourth) channel of pixel color information in addition to the red, green and blue pixel channels. This fourth channel is called the alpha channel, which controls the level of transparency or opacity. By alpha blending the advertising material 30 with the program material 20, the advertising material 30 can be displayed over the programming material 20 such that the programming material 20 is either not visible or partially visible underneath the advertising material 30. The merging may be performed such that the advertising material 30 is displayed in a picture-in-picture format. In the alternative, the merging of the advertising material 30 and the program material 20 may result in the advertising material 30 being displayed as one of a banner or a border. The program material 20 may be at least partially visible during said trick play modes.

The advertising material 30 may be unrelated to the program material 20. The program material 20 may be stored separately from the advertising material as shown in Figure 2, which shows a first memory device (program file 20) for storing the program material and a second memory device (ad file 30) for storing the advertising material. It should be appreciated that the separate storage for the program and ad files can merely be different portions of the same physical memory device, such as a hard drive.

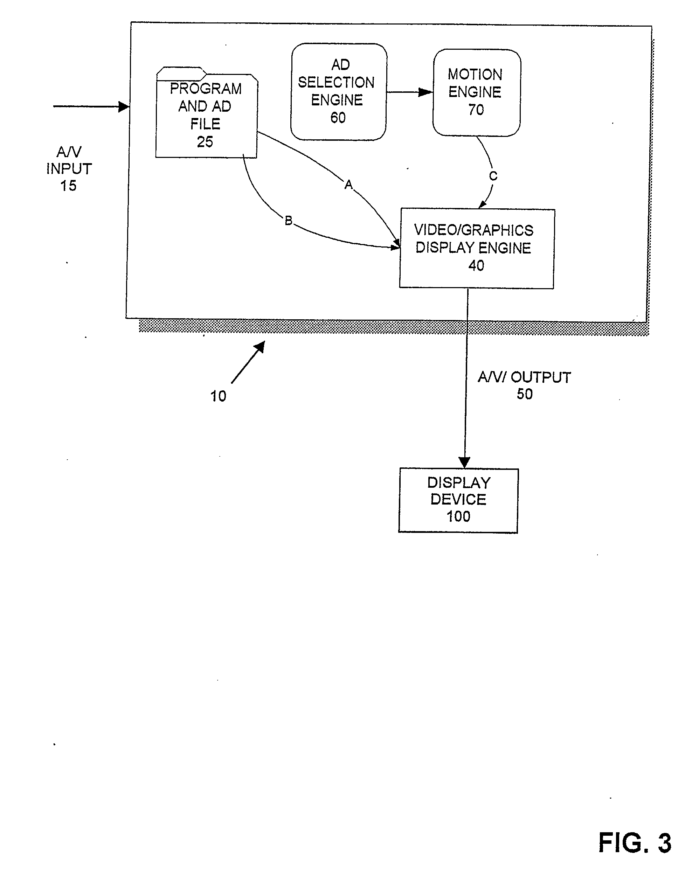

In an alternative embodiment as shown in Figure 3, the advertising material may be associated with the program material being viewed. Where the advertising material is associated with the program material being viewed, the advertising material may be stored together with the programming material in a single file, such as PVR program/ad file 25, or in separate but associated files. In such an embodiment, the advertising material may only be stored while the associated program material is displayed. Alternatively, the advertising material may be stored for as long as the program material is stored.

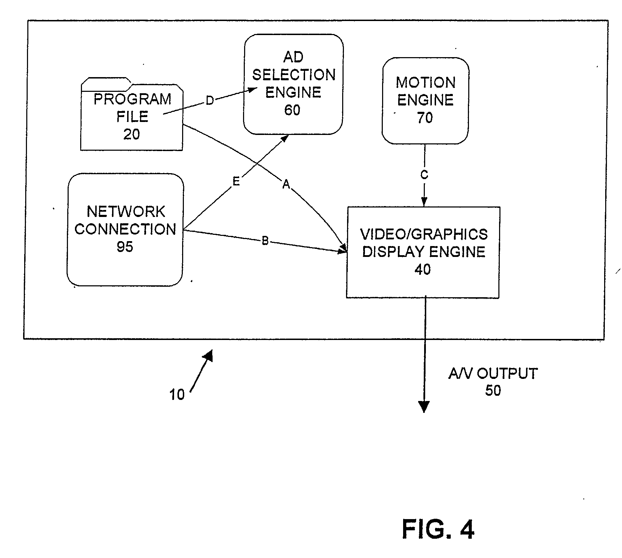

In a further exemplary embodiment as shown in Figure 4, the advertising material may be provided via a connection to network 95, such as an RF cable network, a DSL network, a DOCSIS network, a dial-up network, a wireless network, a satellite network, or any other suitable communications network. Information regarding the source of the advertising material may be provided to the PVR 10 and the advertising material may be downloaded from the source via the network 95 for storage on the PVR 10. For example, the advertising material may be downloaded from the source when the program material 20 is accessed.

The information regarding the source of the advertising material may be contained within the program material 20, in which case such information is provided to the ad selection engine 60 via path D. In the alternative, the information regarding the source of the advertising material may be provided via the network 95, in which case such source information may be provided to the ad selection engine 60 via path E. This source information may be preprocessed information located on specific servers in the network 95, or where the advertising material is provided based on customer preference, such source information may be the result of a network search based on customer preference. Customer preference may be determined through surveys conducted, for example, via mail, Internet, telephone, or in person. In addition, customer preference may be determined by tracking the programs viewed by a viewer, or may be simply entered into the PVR by the user upon set-up.

In the event the advertising material to be displayed is associated with the program material 20, the source information may point to specific network servers, broadband program streams, multicast or broadcast streams that contain the advertising material. Such a technique allows the advertising material to be cached in memory in the PVR 10 only while the program material is being displayed. The PVR 10 may retrieve and store the advertising material when the program material 20 is accessed and remove the advertising material when the program material is no longer being accessed. In the alternative, the advertising material could be cached as long as the program material is present in the memory (program file 20).

The PVR 10 may be a stand-alone device. In the alternative, the PVR functionality may be included in a set-top terminal (as shown in Figure 1), a digital television, a personal computer, or other suitable device. In addition, although the invention is described herein as being implemented in a PVR device, those skilled in the art will realize that the invention may be implemented in any suitable device which is capable of receiving, storing, and displaying any form of data. Further, those skilled in the art will recognize that the invention is not limited to providing the display of advertising material during PVR trick play modes. Any other type of material or data may be displayed during PVR trick play modes, such as news information, sports information, weather information, stock information, electronic program guide information, and the like.

It should now be appreciated that the present invention provides advantageous methods and apparatus for the generation of commercial revenue by providing for the display of advertising material on a personal versatile recorder (PVR) during trick play modes, such as fast forward, rewind, pause, jump, still frame display, and the like.

Although the invention has been described in connection with various illustrated embodiments, numerous modifications and adaptations may be made thereto without departing from the spirit and scope of the invention as set forth in the claims.

## Claims

1. A method for the display of advertising material during personal versatile recorder (PVR) trick play modes, comprising the steps of:
storing program material on a PVR;
storing advertising material on a PVR; and
merging the advertising material with the program material during PVR trick play modes such that the advertising material is displayed during said trick play modes.

2. A method in accordance with claim 1, wherein the trick play modes comprise at least one of pause, scan forward, scan backward, jump, and still frame display.

3. A method in accordance with one of claims 1 or 2, wherein the advertising material to be displayed is controlled by an ad selection engine.

4. A method in accordance with one of claims 1 to 3, wherein said merging is accomplished by alpha blending the advertising material with the program material.

5. A method in accordance with one of claims 1 to 4, wherein said merging results in the advertising material being displayed in a picture-in-picture format.

6. A method in accordance with one of claims 1 to 4, wherein said merging results in said advertising material being displayed as one of a banner or a border.

7. A method in accordance with one of claims 1 to 6, wherein said program material is at least partially visible during said trick play modes.

8. A method in accordance with one of claims 1 to 7, wherein said advertising material is unrelated to said program material.

9. A method in accordance with one of claims 1 to 7, wherein said advertising material is associated with the program material being viewed.

10. A method in accordance with claim 9, wherein said advertising material is stored only while the associated program material is displayed.

11. A method in accordance with claim 9, wherein the advertising material is stored for as long as the program material is stored.

12. A method in accordance with one of claims 1 to 11, wherein said program material is stored separately from said advertising material.

13. A method in accordance with one of claims 1 to 12, wherein the advertising material is provided by at least one of an RF cable network, a DSL network, a DOCSIS network, a dial-up network, a wireless network, and a satellite network.

14. A method in accordance with one of claims 1 to 13, comprising the further steps of:
providing information regarding a source of the advertising material; and
downloading the advertising material from the source for storage on the PVR.

15. A method in accordance with claim 14, wherein the advertising material is downloaded from the source when the program material is accessed.

16. A method in accordance with one of claims 1 to 15, wherein the advertising material is based on customer preference.

17. A method in accordance with one of claims 1 to 16, wherein the PVR comprises one of a set-top terminal, a digital television, or a personal computer.

18. A personal versatile recorder (PVR) apparatus for the display of advertising material during trick play modes, comprising:
one or more memory devices for storing program material and advertising material on the PVR;
a display engine associated with the one or more memory devices for providing display output; and
an motion control engine for directing the display engine to merge the advertising material with the program material during PVR trick play modes such that the advertising material is displayed during said trick play modes.

19. Apparatus in accordance with claim 18, wherein the trick play modes comprise at least one of pause, scan forward, scan backward, jump, and still frame display.

20. Apparatus in accordance with claim 18 or 19, further comprising:
an ad selection engine for controlling the advertising material to be displayed.

21. Apparatus in accordance with one of claims 18 to 20, wherein the display engine merges the advertising material with the program material using alpha blending techniques.

22. Apparatus in accordance with one of claims 18 to 21, wherein the display engine causes said advertising material to be displayed in a picture-in-picture format.

23. Apparatus in accordance with one of claims 18 to 21, wherein the display engine causes said advertising material to be displayed as one of a banner or a border.

24. Apparatus in accordance with one of claims 18 to 23, wherein said program material is at least partially visible during said trick play modes.

25. Apparatus in accordance with one of claims 18 to 24, wherein said advertising material is unrelated to said program material.

26. Apparatus in accordance with one of claims 18 to 24, wherein said advertising material is associated with the program material being viewed.

27. Apparatus in accordance with claim 26, wherein said advertising material is stored only while the associated program material is displayed.

28. Apparatus in accordance with claim 26, wherein the advertising material is stored for as long as the program material is stored.

29. Apparatus in accordance with one of claims 18 to 28, wherein said one or more memory devices comprise a first memory device for storing said program material and a second memory device for storing said advertising material.

30. Apparatus in accordance with one of claims 18 to 29 , further comprising a network connection to at least one of an RF cable network, a DSL network, a DOCSIS network, a dial-up network, a wireless network, and a satellite network for providing the advertising material.

31. Apparatus in accordance with one of claims 18 to 30, wherein information is provided regarding a source of the advertising material to enable downloading of the advertising material from the source for storage on the PVR.

32. Apparatus in accordance with claim 31, wherein the advertising material is downloaded from the source when the program material is accessed.

33. Apparatus in accordance with one of claims 18 to 32, wherein the advertising material is based on customer preference.

34. Apparatus in accordance with one of claims 18 to 33, wherein the PVR comprises one of a set-top terminal, a digital television, or a personal computer.
